# EUROPÄISCHE PATENTSCHRIFT

(11) **EP 1 258 066 B1**
(45) Veröffentlichungstag und Bekanntmachung des Hinweises auf die Patenterteilung: **18.06.2003**
(21) Anmeldenummer: 01953641.6
(22) Anmeldetag: 11.01.2001
(51) Int. Cl.: H01T 4/12, H01T 2/02

(54) **DRUCKFEST GEKAPSELTE FUNKENSTRECKENANORDNUNG ZUM ABLEITEN VON SCHÄDLICHEN STÖRGRÖSSEN DURCH ÜBERSPANNUNGEN**
PRESSURE-RESISTANT ENCAPSULATED AIR-GAP ARRANGEMENT FOR THE DRAINING OFF OF DAMAGING PERTURBANCES DUE TO OVERVOLTAGES
DISPOSITIF A ECLATEUR BLINDE, RESISTANT A LA PRESSION, PERMETTANT DE DEVIER DES PERTURBATIONS NUISIBLES AU MOYEN DE SURTENSIONS

(30) Priorität: 22.02.2000 DE 10008126; 11.04.2000 DE 10018012
(43) Veröffentlichungstag der Anmeldung: 20.11.2002
(73) Patentinhaber: DEHN + SÖHNE GMBH + CO KG, D-92318 Neumarkt (DE)
(72) Erfinder: ZAHLMANN, Peter, 92318 Neumarkt (DE); KÖNIG, Raimund, 92369 Sengenthal (DE); KRAUSS, Bernhard, 92348 Berg (DE); WAFFLER, Michael, 92318 Neumarkt (DE); HIERL, Stefan, 92318 Neumarkt (DE)
(74) Vertreter: Kruspig, Volkmar, Dipl.-Ing.
(86) Internationale Anmeldenummer: EP0100291
(87) Internationale Veröffentlichungsnummer: WO01063710

(56) Entgegenhaltungen:
- FR-A- 2 589 015
- PATENT ABSTRACTS OF JAPAN vol. 014, no. 112 (E-0897), 28. Februar 1990 (1990-02-28) & JP 01 311585 A (OKAYA ELECTRIC IND CO LTD), 15. Dezember 1989 (1989-12-15)

## Beschreibung

Die Erfindung betrifft eine druckfest gekapselte Funkenstreckenanordnung zum Ableiten von schädlichen Störgrößen durch Überspannungen, umfassend mindestens zwei in einem leitfähigen oder mit einer leitfähigen Beschichtung versehenen Gehäuse befindliche, im wesentlichen gegenüberliegende Elektroden, zwischen denen ein Entladungsraum gebildet ist, und wobei die Elektroden zum Gehäuse isoliert sind, gemäß Oberbegriff des Patentanspruchs 1, wie aus FR-A-2.589 015 bekannt.

Gekapselte, nichtausblasende Blitzstrom-Ableiter mit Gleitfunkstrecken sind seit Jahren Stand der Technik und werden z.B. unter den geschützten Handelsbezeichnungen DEHNbloc oder DEHNgap von der Firma DEHN + SÖHNE GmbH + Co.KG vertrieben. Blitzstrom-Ableiter auf Funkenstreckenbasis zum Einsatz in Niederspannungs-Versorgungssystemen besitzen demnach eine Elektrodenkonfiguration, die sich innerhalb eines druckfesten isolierten Gehäuses befindet. Das druckfeste Gehäuse selbst wird aus einem Metallmantel gebildet. Durch unterschiedliche Gestaltung der Elektrodenanordnungen sind verschiedene Ansprechspannungswerte realisierbar. Der übliche dynamische Ansprechspannungwert von bekannten Funkenstrecken-Ableitern liegt bei etwa 4 kV. Dabei gilt, daß die Ansprechspannung bei Lösungen nach dem Stand der Technik über den Abstand der Elektroden vorgegeben ist oder eingestellt werden kann.

Bei Anwendungsfällen insbesondere zum Schutz elektronischer Geräte im Bereich der Informationstechnologie und der Datenverarbeitung sind jedoch niedrige Ansprechspannungswerte im Bereich von ca. 1,5 kV wünschenswert. Die hierfür erforderlichen kleinen oder geringen Abstände lassen sich jedoch ohne zusätzliche Maßnahmen und/oder technologischen Aufwand nicht ohne weiteres realisieren.

Bei sogenannten ausblasenden, d.h. ungekapselten Ableitern besteht eine Möglichkeit, die Ansprechspannung durch das Vorsehen einer zusätzlichen Triggerelektrode zu verringern. Diese Triggerelektrode bewirkt in Verbindung mit einer elektrischen Triggereinrichtung, die einen Triggertransformator aufweist, das Zünden einer Teilfunkenstrecke mit unmittelbar danach eingeleiteter Zündung der Hauptfunkenstrecke.

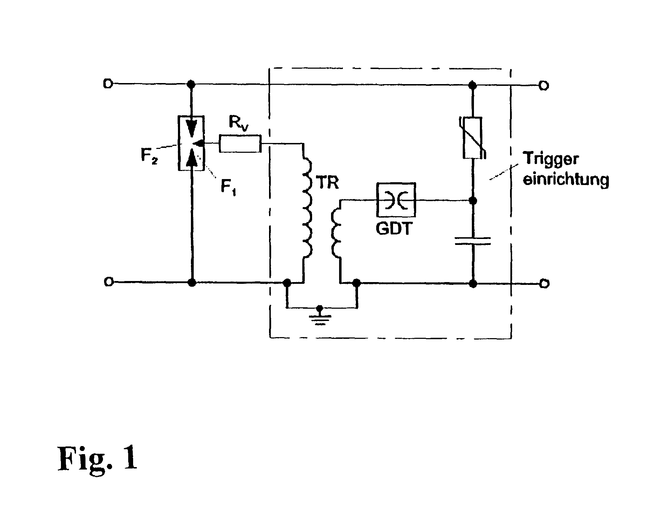

Die Ausbildung einer Funkenstrecke mit Triggerelektrode nebst zugehöriger Triggereinrichtung sei unter Hinweis auf Fig. 1 näher erläutert. Nach dem Zünden des dort gezeigten Gasableiters (GDT) wird mittels eines Impulstrafos TR eine solche Zündspannung erzeugt, daß die Teilfunkenstrecke F₁ und unmittelbar danach die Hauptfunkenstrecke F₂ zündet.

Das Ansprechen der Teilfunkenstrecke F₁ wird also durch das Zünden des Gasableiters eingeleitet. Die Ansprechspannung gasgefüllter Überspannungsableiter ist über einen recht weiten Bereich variierbar und bis zu Spannungen unter 1 kV unproblematisch. Die quasi externe Hilfszündung wird über den Impulstransformator TR auf einen solchen Spannungswert erhöht, daß die vorerwähnte Funkenstrecke F₁ sicher zünden kann.
Es wird also mit einer bekannten Anordnung nach Fig. 1 möglich, bei kleinen Werten der Eingangsspannung die Funkenstrecke zu zünden und somit den gewünschten niedrigen Schutzpegel von z.B. 1,5 oder 2 kV zu realisieren.

Würde man diese vorgeschlagene Verfahrensweise auf druckfest gekapselte Funkenstrecken übertragen, besteht das konstruktive Problem darin, eine hochspannungsführende Triggerelektrode druckdicht durch die Kapselung zu führen und elektrisch zu kontaktieren.

Dies ist jedoch nur mit erheblichen fertigungsseitigen Aufwendungen und daher mit höheren Kosten verbunden umsetzbar.

Es ist daher Aufgabe der Erfindung, eine druckfest gekapselte Funkenstreckenanordnung, umfassend mindestens zwei in einem leitfähigen oder mit einer leitfähigen Beschichtung versehenen Gehäuse befindliche, im wesentlichen gegenüberliegende Elektroden, zwischen denen ein Entladungsraum gebildet ist, anzugeben, welche eine niedrige Ansprechspannung im Bereich ≤ 2 kV ermöglicht, ohne daß die Notwendigkeit besteht, extern herauszuführende oder zu kontaktierende an sich bekannte Triggerelektroden einzusetzen.

Die Lösung der Aufgabe der Erfindung erfolgt mit einem Gegenstand gemäß den Merkmalen des Patentanspruchs 1, wobei die Unteransprüche mindestens zweckmäßige Ausgestaltungen und Weiterbildungen umfassen.

Demgemäß besteht der Grundgedanke der Erfindung darin, das metallische Gehäuse bzw. den metallischen Mantel der druckfesten Kapselung der Funkenstreckenanordnung mittelbar als Triggerelektrode zu verwenden, so daß eine Triggerung und damit eine reduzierende Ansprechspannung ohne weitere aufwendige Maßnahmen erreicht werden kann. Bevorzugt sind die Elektroden der Funkenstreckenanordnung so ausgeformt, daß diese einen nach innen quasi abgeschlossenen Hohlraum bilden, wobei Teile der Außenflächen der Elektroden sich durch eine relativ dünne Isolierschicht getrennt in unmittelbarer Nähe des Metallmantels des Gehäuses oder einer metallischen Beschichtung befinden. Durch diese Maßnahme kann der Außenmantel oder eine dort aufgebrachte metallische Beschichtung als Triggerelektrode genutzt werden.

Aufgrund der Ausführungsform der einen Hohlraum bildenden Elektroden besteht ein wesentlicher Vorteil darin, daß der sich ausbildende Lichtbogen gänzlich von abbrandfestem Elektrodenmaterial umgeben ist, wodurch die Belastung aller übrigen Konstruktionsteile durch den Lichtbogen erheblich gesenkt werden kann. Dadurch können in Verbindung mit der Elektrodenanordung auch sehr große Impulsströme auf kleinstem Raum sicher beherrscht werden.

In dem Falle, daß zur Triggerung der Hauptfunkenstrecke zwischen den Elektroden energiereiche Zündimpulse benötigt werden, und die Gefahr besteht, daß der Metallmantel des Gehäuses beschädigt werden kann, ist im Inneren des Gehäuses eine Beschichtung aus abbrandfesten Materialien, z.B. Wolfram-Kupfer, vorgesehen. Vorgesehene Triggerelemente, die innerhalb des Gehäuses befindlich sind und die mit diesem in elektrischem Kontakt stehen, können unterschiedlich weit in den Entladungsraum bzw. die Lichtbogenkammer hineinreichen und diese auch in geometrisch getrennte Teilbereiche separieren, was zu positiven Auswirkungen auf ein zu optimierendes Folgestrom-Löschvermögen führt, da bei der speziellen Gestaltung der Triggerelemente in Reihe geschaltete Teillichtbögen realisierbar sind.

Bei einer weiteren Ausführungsform kann die im Inneren des Gehäuses vorgesehene Triggerelektrode aus einem leitfähigen Kunststoff, z.B. POM bestehen. Hieraus ergibt sich der Vorteil, daß das Abbrandverhalten der Triggerelektrode ähnlich demjenigen des Isolierstoffs, der in der Lichtbogenkammer vorhanden ist, ausgebildet wird. Durch die unter Lichtbogeneinwirkung erfolgende Abgabe von leitfähigen Partikeln aus dem Kunststoff ist die Zündenergie, die zum Überschlag der Funkenstrecke führt, weiter reduzierbar, so daß mit relativ geringer Zündenergie große Funkenstrecken-Schlagweiten erreicht werden können.

Wird ein Kunststoff gewählt, welcher gasabgebend ist, kann darüber hinaus das Folgestrom-Löschvermögen der Funkenstreckenanordnung weiter verbessert werden.

Wenn für die Triggerelektrode ein widerstandsbehafteter, leitfähiger Kunststoff zum Einsatz kommt, kann der sich hier ergebende Bahnwiderstand des Kunststoffmaterials zur Optimierung des Triggerkreises benutzt werden. Damit ist ein externer Vorwiderstand, wie beim Stand der Technik erforderlich, nicht mehr notwendig und es besteht keine Gefahr, daß Teilströme über die extern vorgesehene Beschaltung fließen. Das heißt, der Bahnwiderstand des Kunststoffs verhindert, daß ein unerwünschter Folgestromanteil durch einen externen Impulstransformator fließt.

Es wird also gemäß der Erfindung über das leitfähige Gehäuse möglich, eine Triggerspannung zur Bildung einer Teilfunkenstrecke im Entladungsraum anzulegen, wobei über die Teilfunkenstrecke, die sich im Inneren des Gehäuses aufbaut, die eigentliche Hauptfunkenstrecke zwischen den Elektroden mit geringerer Energie zündbar ist.

Bevorzugt ist die zwischen dem Entladungsraum und dem Gehäuse vorgesehene befindliche Isolation im Bereich der auszubildenden Teilfunkenstrecke durchbrochen.
Im erwähnten Durchbruch kann ein der Gehäuseform angepaßter, vorzugsweise ringförmiger isolierender Elektroden-Abstandshalter angeordnet sein, wobei der Abstandshalter mindestens eine schlitzförmige Aussparung oder Bohrung für den Weg der Teilfunkenstrecke besitzt.

Die den Entladungsraum umschließenden, gegenüberliegend angeordneten Elektroden können eine konkave Form besitzen, so daß sich der gewünschte quasi geschlossene Hohlraum ergibt.

Weiterhin kann im Durchbruch ein mit dem leitfähigen Gehäuse in Kontakt stehender leitfähiger, in den Entladungsraum hineinreichender Einsatz aus abbrandfestem Material angeordnet werden, welcher die Funktion einer internen Triggerelektrode übernimmt. Dieser Einsatz steht dann mit der leitfähigen Innenwandung des Gehäuses bzw. mit der metallischen Gehäusekapselung selbst in Verbindung. Über den hineinreichenden Einsatz aus z.B. Wolfram-Kupfer-Material kann nun sowohl eine Vorzündung erfolgen als auch ein Hauptlichtbogen erzeugt werden. Bei einer Mehrfachanordnung eines Einsatzes, z.B. in Form einer geschlitzten Scheibe, können sich mehrere Hauptlichtbögen zwischen dem Einsatz und der jeweiligen Elektrode einstellen, so daß sich die Bogenspannung vervielfacht bzw. erhöht.

Weiterhin bevorzugt besitzen die Hauptelektroden eine aufeinander zu weisende konische Form, wobei der oben erwähnte leitfähige Einsatz zu den gegenüberliegenden Koni gerichtet ist und der Bildung der Teilfunkenstrecke einerseits, aber auch im größeren Abstand zu den Hauptelektroden liegend der Bildung der Hauptfunkenstrecke oder -funkenstrecken dient.

Der leitfähige Einsatz kann eine außenumfangsseitig an das Gehäuse angepaßte Scheibenform mit Öffnung besitzen, wobei die inneren Enden der Öffnung dickenreduziert sind und zu den bevorzugt konisch ausgeführten Elektroden weisen. Über eine Variation der Geometrieparameter ist eine Beeinflussung des Zündverhaltens bzw. der maximalen Bogenspannung in einem weiten Bereich möglich, ohne daß die Grundform respektive die Grundkonfiguration der Funkenstreckenanordnung geändert werden muß. Bei einem Standard-Gehäuse können verschiedene Elektrodeneinsätze, aber auch verschiedene Triggerelektrodenformen zur Anwendung kommen, um auf unterschiedliche Anwendungsfälle mit einem spezifischen Produkt reagieren zu können.

Der erwähnte leitfähige, als Triggerelektrode wirkende Einsatz kann als Ring ausgeführt sein, welcher mehrere zum Mittelpunkt weisende Stege aufweist, wobei die Abstände zwischen den Stegen und dem Ring mindestens einen Teil des Entladungsraums bilden.

Bei einer weiteren Ausführungsform der Erfindung kann im Durchbruch ein Einsatz aus leitfähigem, mindestens teilweise in den Entladungsraum hineinreichenden Kunststoff angeordnet werden, wie dies bereits erläutert wurde.

Eine rotationssymmetrische Ausbildung der Funkenstreckenanordnung bezogen auf die Mittellängsachse sowie eine spiegelsymmetrische Gestalt senkrecht zur Mittellängsachse, geschnitten im Bereich des Durchbruchs, führt zu konstruktiven Vereinfachungen und stellt stabile elektrische Parameter sicher.

Eine alternative Ausführungsform der Erfindung geht, ohne den Grundgedanken selbiger zu verlassen, davon aus, daß im Bereich eingegrenzt von den sich gegenüberliegenden Elektrodenflächen und der Gehäuseinnenseite mit Ausnahme eines Abschnitts für den Entladungsraum ein gasabgebender Isolierstoff befindlich ist. Im Isolierstoff eingebettet oder eingebracht befindet sich mindestens eine Triggerelektrode, die mit dem leitfähigen Gehäuse in Verbindung steht, d.h. elektrisch kontaktiert ist. Ist nun in diesem Fall die Triggerelektrode asymmetrisch im Raum zwischen den Elektroden befindlich, wird über den dichten Abstand zwischen einer der Elektroden und der Triggerelektrode die Teilfunkenstrecke gebildet, wobei nach Zünden dieser die eigentliche Hauptfunkenstrecke zwischen den Hauptelektroden zur Zündung kommt.

Alles in allem gelingt es mit der vorgestellten Funkenstreckenanordnung, über die Nutzung einer druckfesten leitfähigen, in der Regel metallischen Kapselung eine interne Triggerelektrode zu schaffen, mit deren Hilfe niedrige Ansprechspannungswerte auch z.B. für den speziellen Schutz von elektronischen Geräten der Datenverarbeitung oder der Informationstechnologie gewährleistet werden kann, ohne daß minimale Abstände zwischen den Hauptelektroden eingehalten müssen, die bei dynamischen Ansprechspannungswerten von 4 kV bereits im Bereich von 0,3 bis 0,5 mm liegen.

Die einen Hohlraum bildenden oder einschließenden Hauptelektroden bewirken einen Schutz und eine Entlastung in Sachen Abbrand der übrigen Konstruktionsteile, so daß sich weitere Verbesserungen hinsichtlich der Langzeitstabilität einer derartig ausgebildeten Funkenstreckenanordnung ergeben.
Durch die Gestaltung der inneren Triggerelektrodenelemente läßt sich der Lichtbogen grundsätzlich in mehrere Teile trennen oder aufspalten, so daß die Löscheigenschaften der Anordnung verbessert werden können.

Die Erfindung soll nachstehend anhand eines Ausführungsbeispiels sowie unter Zuhilfenahme von Figuren näher erläutert werden.

Hierbei zeigen:
- Fig. 1: ein Blockschaltbild einer Funkenstrecke mit Hilfs- oder Triggerelektrode sowie zugehöriger Triggereinrichtung gemäß Stand der Technik;
- Fig. 2: eine erste Ausführungsform der Funkenstreckenanordnung mit Hauptelektroden, welche einen Hohlraum einschließen:
- Fig. 3: einen Einsatzring als Abstandshalter zur Verwendung bei einer Ausführungsform gemäß Fig. 2;
- Fig. 4: eine weitere Ausführungsform der Funkenstreckenanordnung mit Hauptelektroden in konischer Form sowie einem Einsatz aus abbrandfestem Material zur Bildung der Triggerelektrode;
- Fig. 5: eine Ausführungsform ähnlich derjenigen nach Fig. 4 mit einem leitfähigen ringförmigen Einsatz, welcher zum Mittelpunkt hin gerichtete Stege aufweist;
- Fig. 6: eine Detaildarstellung des Einsatzes zur Verwendung bei einer Anordnung nach Fig. 5;
- Fig. 7: eine Funkenstreckenanordnung mit einem Einsatz aus leitfähigem, mindestens teilweise in den Entladungsraum hineinreichenden Kunststoff;
- Fig. 8: eine Detaildarstellung des Kunststoffeinsatzes zur Verwendung bei einer Anordnung nach Fig. 7; und
- Fig. 9: eine weitere Ausführungsform einer Funkenstreckenanordnung mit asymmetrisch im Raum zwischen den Hauptelektroden angeordneten Triggerelektroden.

Bei den im Ausführungsbeispiel vorgestellten Funkenstreckenanordnungen handelt es sich um solche, welche im wesentlichen gegegenüber liegende Hauptelektroden 1 und 2 aufweisen, die gegenüber einem druckfesten, leitfähigen Gehäuse 3 mittels eines geeigneten Materials 4 elektrisch isoliert und abdichtend zum elektrischen Anschluß herausgeführt sind.

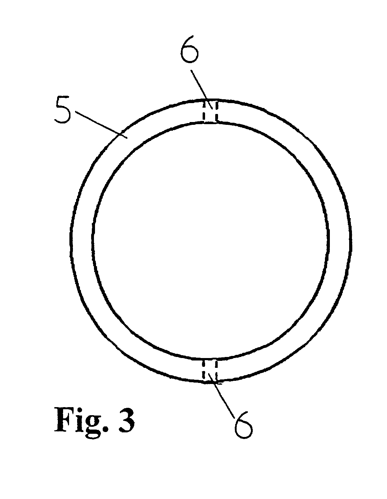

Die Hauptelektroden 1 und 2 werden durch einen Isolierring 5 auf Abstand gehalten. Einzelheiten des Isolierrings 5 sind der Fig. 3 zu entnehmen. Diese Figur macht auch deutlich, daß der Isolierring 5 mindestens zwei Durchbrüche oder Bohrungen 6 besitzt. An den Stellen der Bohrungen oder Durchbrüche 6 kann sich eine Teilfunkenstrecke zwischen dem leitfähigen Gehäuse 3 und einer der Elektroden, beim gezeigten Beispiel der Hauptelektrode 1 ausbilden. Diese Teilfunkenstrecke führt zu einem Vorionisieren und nachfolgenden Zünden der Hauptfunkenstrecke zwischen den Hauptelektroden 1 und 2.

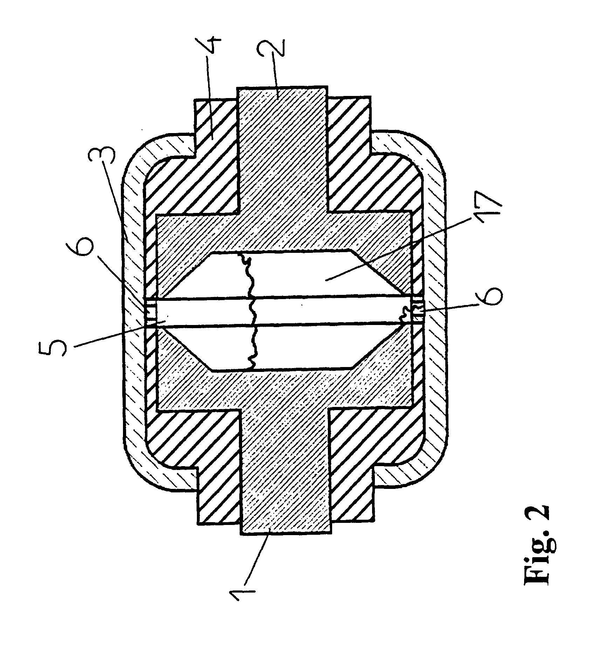

Die Hauptelektroden 1 und 2 besitzen beim gezeigten Beispiel nach Fig. 2 eine konkave Gestalt, so daß sich ein quasi umschlossener Hohlraum ergibt, welcher einen kammerförmigen Entladungsraum bildet. Dadurch, daß der Lichtbogen gänzlich von abbrandfestem Material der Elektroden 1 und 2 umgeben ist, wird die Belastung der übrigen Konstruktionselemente durch den sich ausbildenden oder entstehenden Lichtbogen erheblich reduziert, so daß auch hohe Impulsströme auf kleinstem Raum sicher beherrschbar sind.

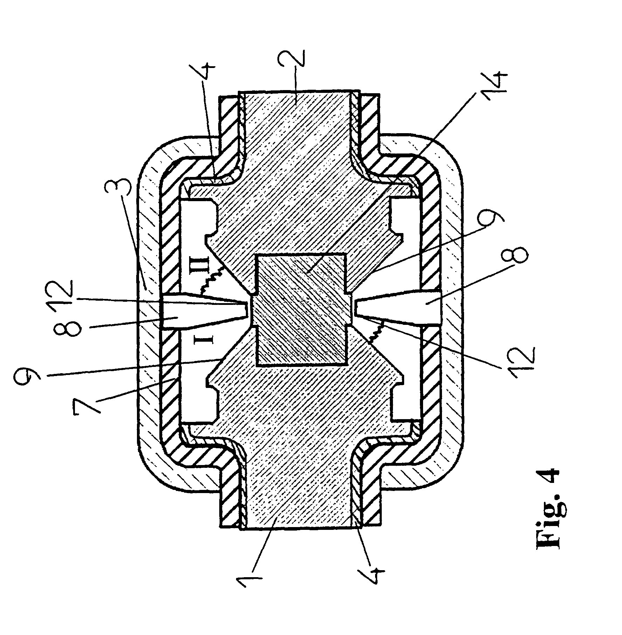

Im Falle energiereicher Zündimpulse zum Zünden der Teilfunkenstrecke mit nachfolgender Zündung der Hauptfunkenstrecke besteht die Gefahr, daß das leitfähige Gehäuse 3 an seiner Innenseite beschädigt wird.
Zur Vermeidung dieses Nachteils wird bei einem Ausführungsbeispiel gemäß Fig. 4 vorgeschlagen, im Inneren des leitfähigen Gehäuses 3 eine abbrandfeste Beschichtung oder einen abbrandfesten Einsatz 7 vorzusehen. Dieser abbrandfeste Einsatz 7 kann beispielsweise aus einem Wolfram/Kupfer-Material bestehen.

Weiterhin macht die Fig. 4 deutlich, daß die Möglichkeit besteht, einen leitfähigen Triggerelektrodeneinsatz 8 so innerhalb des Gehäuses 3 bzw. des abbrandfesten Einsatzes 7 anzuordnen, daß durch die derart vorgenommene geometrische Trennung der Lichtbogenkammer bzw. des Entladungsraums sich positive Auswirkungen auf das Folgestrom-Löschvermögen ergeben, da sich in Reihe geschaltete Teillichtbögen ausbilden. Ein erster Teillichtbogen brennt dabei von der ersten Hauptelektrode 1 auf die leitfähige Triggerelektrode 8, wobei der zweite Teillichtbogen von letzterer zur Hauptelektrode 2 führt.

Der Abstand des leitfähigen Triggerelektrodeneinsatzes 8 zu den Hauptelektroden 1 und 2 bestimmt die Durchschlagspannung der Anordnung. Durch eine geometrische Änderung läßt sich dieser Spannungswert im weiten Bereich variieren.

Die Hauptelektroden 1 und 2 nach Fig. 4 besitzen eine aufeinander zu weisende konische Form, wobei der leitfähige Triggerelektrodeneinsatz 8 zu den gegenüber liegenden Koni 9 zur Ausbildung der Teilfunkenstrecke führt. Die elektrische Kontaktierung der leitfähigen Triggerelektrode bzw. des Triggerelektrodeneinsatzes 8 erfolgt über das Inkontaktstehen mit dem leitfähigen Gehäuse 3 und einer nicht gezeigten Außenanschlußmöglichkeit.

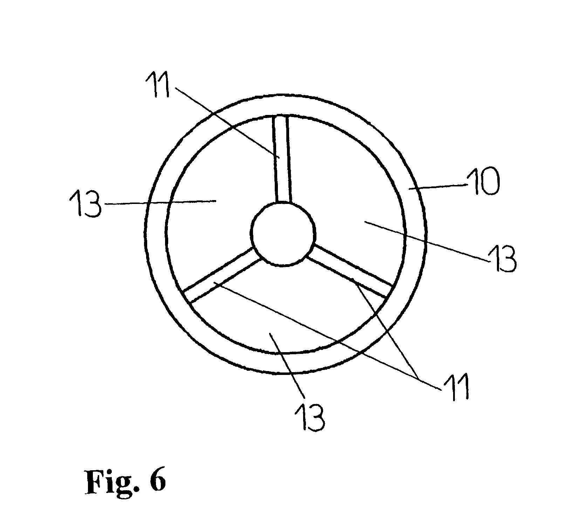

Für den Anwendungsfall der Anordnung als Trennfunkenstrecke, bei der eine Folgestrom-Löschung nicht notwendig ist, soll in vorteilhafter Weise eine möglichst niedrige Bogenspannung gegeben sein. Hierdurch wird der Energieumsatz und damit der Verschleiß der Anordnung gering gehalten. In diesem Fall kann der leitfähige Triggerelektrodeneinsatz 8 so ausgeführt sein, daß gemäß Fig. 6 von einem leitfähigen Ring 10 mit Stegen 11 ausgegangen wird. In diesem Fall bildet sich die Hauptfunkenstrecke nur zwischen den Hauptelektroden 1 und 2 aus, wobei das Triggerzündverhalten im wesentlichen unverändert bleibt.

Der leitfähige Triggerelektrodeneinsatz 8 kann die Form des vorerwähnten Rings, aber auch eine Scheibenform besitzen, wobei die Scheibe oder der Ring eine Öffnung besitzt. Die inneren Enden 12 der Öffnung sind dickenreduziert, z.B. kontinuierlich verjüngend ausgeführt und weisen mit diesen Abschnitten zu den Hauptelektroden 1 und 2.

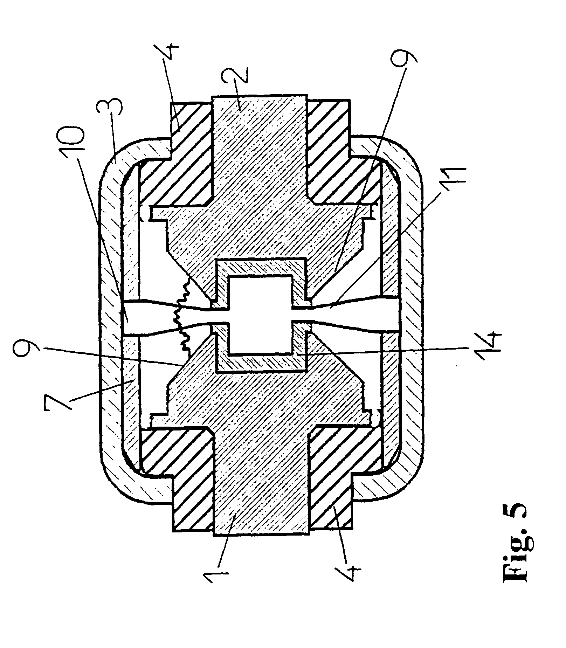

Die Abstände oder Freiräume 13 zwischen den Stegen 11 des Rings 10 gemäß Fig. 6 bilden einen Teil des Entladungsraums bei der Ausführungsform der Funkenstreckenanordnung nach Fig. 5, wobei auch dort ein abbrandfester Einsatz 7 im Inneren des leitfähigen Gehäuses 3, beispielsweise aus Wolfram-Kupfer eingebracht ist. Alternativ kann der Einsatz 7 aus einem gasabgebenden Isolierstoff, z.B. POM bestehen.

Wie aus den Fig. 2 bis 8 ohne weiteres ersichtlich, wird bei den vorgestellten Ausführungsbeispielen von einer Funkenstreckenanordnung, gekennzeichnet durch eine rotationssymmetrische Ausbildung bezogen auf die Mittellängsachse sowie eine spiegelsymmetrische Gestalt senkrecht zur Mittellängsachse, und zwar geschnitten im Bereich des Isolierrings 5 bzw. des Rings 10 ausgegangen. Eine solche Anordnung läßt sich technologisch gut beherrschen und besitzt bezüglich der Druckfestigkeit günstige Eigenschaften.
Selbstverständlich ist das erfindungsgemäße Prinzip der Nutzung des leitfähigen Gehäuses bei gekapselten Funkenstreckenanordnungen zur Bildung einer Triggerelektrode auch für andere Gehäuseformen anwend- und übertragbar.

Die konisch ausgebildeten Elektroden gemäß den Ausführungsformen nach Fig. 4 und 5 werden von einem Isolierblock 14 zentrisch gehalten und positioniert, wobei der Block 14 nach Fig. 5 auch als zweigeteilter Einsatz zur Aufnahme des Rings 10 mit Stegen 11 ausgebildet sein kann.

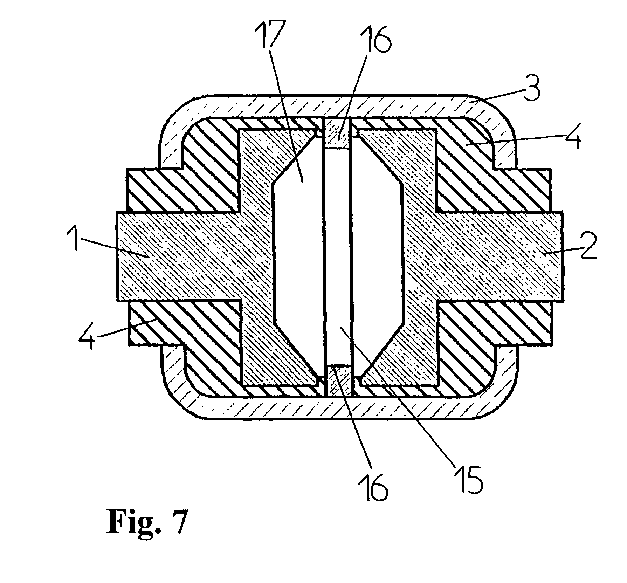

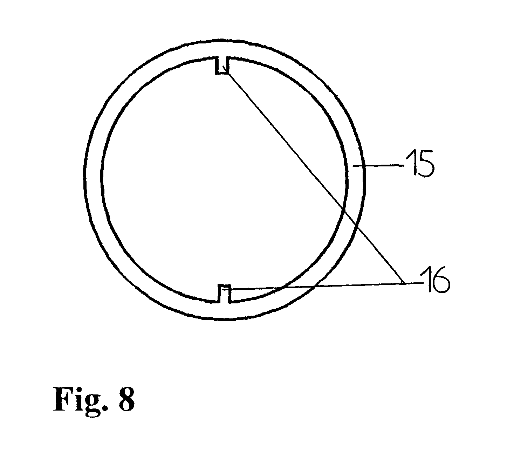

Bei einer weiteren Ausführungsform der Funkenstreckenanordnung nach Fig. 7 ist ein ringförmiger Einsatz 15 aus einem leitfähigen Kunststoff, z.B. POM vorgesehen. Dieser ringförmige leitfähige Kunststoffeinsatz 15 besitzt Vorsprünge oder Nasen 16, welche als Triggerelektroden dienen. Wie aus der Fig. 7 ersichtlich, steht der in Fig. 8 im Detail gezeigte ringförmige leitfähige Kunststoffeinsatz in elektrischem Kontakt mit dem leitfähigen Gehäuse 3 zum Anlegen der Triggerspannung. Bei den Ausführungsformen nach Fig. 7 und 8 mit einem leitfähigen Kunststoffeinsatz als Triggerelektrode besteht der Vorteil darin, daß sowohl die Triggerelektrode als auch das Isoliermaterial 4 innerhalb der Anordnung annähernd ähnliche Abbrandeigenschaften besitzen.

Ein weiterer Vorteil besteht darin, daß der eingesetzte Kunststoff unter Lichtbogeneinwirkung leitfähige Partikel, z.B. Graphit abgeben kann, so daß die notwendige Zündenergie, die zum Überschlag der Funkenstrecke im Entladungsraum 17 erforderlich ist, erheblich abgesenkt werden kann. Weiterhin können die Kunststoffmaterialien so gewählt werden, daß diese ein Gas, z.B. H₂ abgeben, so daß das Folgestrom-Löschvermögen der Anordnung verbessert werden kann.

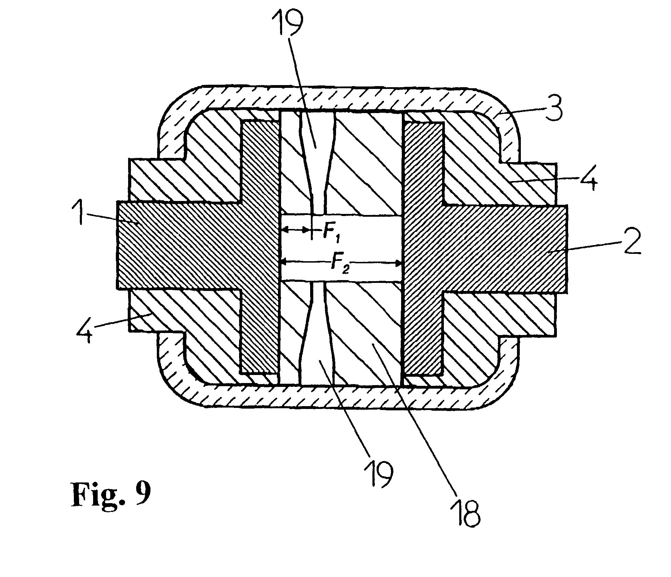

Bei der Funkenstreckenanordnung nach Fig. 9 ist der Entladungsraum 17 vollständig von einem gasabgebenden Isolierstoffmaterial 18 umgeben. In diesem gasabgebenden Isolierstoffmaterial 18 ist mindestens eine leitfähige Triggerelektrode 19 eingebettet, die bis zum Entladungsraum 17 reicht. Bedingt durch die unsymmetrische Anordnung der eingebetteten leitfähigen Triggerelektrode 19 bilden sich unterschiedliche Funkenstrecken aus. Über die Triggerelektrode 19 ist gemäß Fig. 9 zunächst die Teilfunkenstrecke F₁ zündbar mit der Folge, daß diese Vorzündung die Hauptfunkenstrecke F₂ ionisiert, so daß diese selbst zündet und der Lichtbogen über die Strecke F₁ verlischt.

In dem Fall, wenn für die Triggerelektroden ein leitfähiger Kunststoff zur Anwendung kommt, kann der spezifische Widerstand des Kunststoffmaterials einen ansonsten erforderlichen Vorwiderstand Rᵥ, wie beim bekannten Stand der Technik erforderlich, ersetzen, so daß die Gefahr eines Stromflusses oder Teilstromflusses über die externe Beschaltung reduziert ist. Der vorhandene spezifische oder Bahnwiderstand des Kunststoffs verhindert also, daß ein unerwünschter Folgestromanteil durch einen externen, mit der Triggerelektrode respektive dem Außengehäuse in Verbindung stehenden Impulstransformatur fließt.

### Bezugszeichenliste

- 1, 2: Hauptelektroden
- 3: leitfähiges Gehäuse
- 4: Isoliermaterial
- 5: Isolierring
- 6: Bohrung oder Durchbrüche
- 7: abbrandfester Einsatz
- 8: leitfähiger Triggerelektrodeneinsatz
- 9: Konus
- 10: Ring
- 11: Stege des Rings 10
- 12: verjüngte innere Enden
- 13: Abstände, Freiräume
- 14: Isolierblock
- 15: ringförmiger leitfähiger Kunststoffeinsatz
- 16: Vorsprünge oder Nasen
- 17: Entladungsraum
- 18: gasabgebendes Isolierstoffmaterial
- 19: eingebettete leitfähige Triggerelektrode

## Patentansprüche

1. Druckfest gekapselte Funkenstreckenanordnung zum Ableiten von schädlichen Störgrößen durch Überspannungen, umfassend mindestens zwei in einem leitfähigen oder mit einer leitfähigen Beschichtung versehenen Gehäuse befindlichen, im wesentlichen gegenüberliegenden Elektroden, zwischen denen ein Entladungsraum gebildet ist, und wobei die Elektroden zum Gehäuse isoliert sind,
**dadurch gekennzeichnet, daß**
unmittelbar über das leitfähige Gehäuse zur Bildung einer Teilfunkenstrecke im Entladungsraum eine Triggerspannung anlegbar ist, wobei über die Teilfunkenstrecke die Hauptfunkenstrecke zwischen den Hauptelektroden zündbar ist.

2. Funkenstreckenanordnung nach Anspruch 1,
**dadurch gekennzeichnet, daß**
die zwischen Entladungsraum und dem Gehäuse befindliche Isolation im Bereich der auszubildenden Teilfunkenstrecke durchbrochen ist.

3. Funkenstreckenanordnung nach Anspruch 2,
**dadurch gekennzeichnet, daß**
im Durchbruch ein der Gehäuseform angepaßter, vorzugsweise ringförmiger isolierender Abstandshalter angeordnet ist, wobei der Abstandshalter mindestens eine schlitzförmige Aussparung oder Bohrung für die Teilfunkenstrecke besitzt.

4. Funkenstreckenanordnung nach einem der vorangegangenen Ansprüche,
**dadurch gekennzeichnet, daß**
die gegenüberliegenden Elektroden einen Hohlraum einschließen, welcher einen kammerförmigen Entladungsraum bildet.

5. Funkenstreckenanordnung nach Anspruch 2,
**dadurch gekennzeichnet, daß**
im Durchbruch ein mit dem leitfähigen Gehäuse in Kontakt stehender leitfähiger, in den Entladungsraum hinein reichender Einsatz aus abbrandfestem Material angeordnet ist.

6. Funkenstreckenanordnung nach Anspruch 5,
**dadurch gekennzeichnet, daß**
die Elektroden eine aufeinander zu weisende konische Form besitzen, wobei der leitfähige Einsatz zu den gegenüberliegenden Koni zur Bildung der Teilfunkenstrecken in zwei Entladungsräumen führt.

7. Funkenstreckenanordnung nach Anspruch 6,
**dadurch gekennzeichnet, daß**
der leitfähige Einsatz eine außenumfangsseitig an das Gehäuse angepaßte Scheibenform mit Öffnung besitzt, wobei innere Enden der Öffnung dickenreduziert sind und zu den Elektroden weisen.

8. Funkenstreckenanordnung nach Anspruch 6,
**dadurch gekennzeichnet, daß**
der leitfähige Einsatz als Ring ausgeführt ist, welcher mehrere zum Mittelpunkt weisende Stege aufweist, wobei die Abstände zwischen den Stegen und dem Ring mindestens einen Teil des Entladungsraums bilden.

9. Funkenstreckenanordnung nach Anspruch 2,
**dadurch gekennzeichnet, daß**
im Durchbruch ein Einsatz aus leitfähigem, mindestens teilweise in den Entladungsraum hinein reichenden Kunststoff angeordnet ist, welcher stromsteuernde Eigenschaften besitzt.

10. Funkenstreckenanordnung nach einem der Ansprüche 2 bis 9, **gekennzeichnet durch**
eine rotationssymmetrische Ausbildung bezogen auf die Mittellängsachse sowie eine spiegelsymmetrische Gestalt senkrecht zur Mittellängsachse, geschnitten im Bereich des Durchbruchs der Isolation.

11. Funkenstreckenanordnung nach Anspruch 1,
**dadurch gekennzeichnet, daß**
im Bereich, eingegrenzt von den sich gegenüberliegenden Elektrodenflächen und der Gehäuseinnenseite mit Ausnahme eines Abschnitts für den Entladungsraum ein gasabgebender Isolierstoff befindlich ist, wobei im Isolierstoff eingebettet oder eingebracht mindestens eine Triggerelektrode vorgesehen ist, die in elektrischem Kontakt mit dem leitfähigen Gehäuse steht.

12. Funkenstreckenanordnung nach Anspruch 11,
**dadurch gekennzeichnet, daß**
sich die Triggerelektrode asymmetrisch im Raum zwischen den Elektroden befindet, wobei der dichte Abstand zwischen einer der Hauptelektroden und der Triggerelektrode die Teilfunkenstrecke bildet.

## Claims

1. A pressure-proof encapsulated spark gap arrangement for the dissipation of detrimental interferences by over-voltages, comprising at least two essentially opposite electrodes (1, 2) located in a conductive housing (3) or in a housing provided with a conductive coating, between which a discharge space (17) is formed, and with the electrodes (1, 2) being insulated against the housing (3),
**characterised in that**
a trigger voltage can be applied immediately over the conductive housing (2) for the formation of a partial spark gap in the discharge space (17), with the primary spark gap between the primary electrodes (1, 2) being capable of being struck via the partial spark gap.

2. The spark gap arrangement according to Claim 1,
**characterised in that**
the insulation (4) between the discharge space (17) and the housing (3) is broken-through in the area of the partial spark gap to be formed.

3. The spark gap arrangement according to Claim 2,
**characterised in that**
a preferably annular, insulating spacer which is adapted to the housing form is arranged in the break-through, with the spacer comprising at least one slot-shaped recess or hole for the partial spark gap.

4. The spark gap arrangement according to one of the previous claims,
**characterised in that**
the opposite electrodes encompass a hollow space which forms a chamber-shaped discharge space (17).

5. The spark gap arrangement according to Claim 2,
**characterised in that**
a conductive insert of arc-resistant material in contact with the conductive housing (3) is arranged in the break-through, which extends into the discharge space (17).

6. The spark gap arrangement according to Claim 5,
**characterised in that**
the electrodes (1, 2) have conical shapes facing each other, with the conductive insert extending to the opposite cones for the formation of the partial spark gaps in two discharge spaces.

7. The spark gap arrangement according to Claim 6,
**characterised in that**
the conductive insert has a disk shape with an opening, the outer circumference of which is adapted to the housing (3) with the inner ends of the opening being reduced in thickness and facing towards the electrodes (1, 2).

8. The spark gap arrangement according to Claim 6,
**characterised in that**
the conductive insert is formed as a ring (10) which comprises several webs (11) facing towards the centre, with the distances between the webs (11) and the ring (10) forming at least a part of the discharge space (17).

9. The spark gap arrangement according to Claim 2,
**characterised in that**
an insert (15) of conductive synthetic material, which extends at least partially into the discharge space (17) and which possesses current-controlling properties, is arranged in the break-through.

10. The spark gap arrangement according to one of Claims 2 to 9,
**characterised by**
a rotation-symmetrical form relative to the longitudinal centre axis as well as by a mirror symmetrical shape perpendicular to the longitudinal centre axis, intersected in the area of the break-through of the insulation.

11. The spark gap arrangement according to Claim 1,
**characterised in that**
a gas-emitting insulation material (18) is located in the area defined by the opposite electrode surfaces and the inside of the housing (3), with the exception of a portion for the discharge space (17), with at least one trigger electrode (19) being provided which is embedded or inserted in the insulation material (18), which is in electric contact with the conductive housing (3).

12. The spark gap arrangement according to Claim 11,
**characterised in that**
the trigger electrode (19) is located asymmetrically in the space between the electrodes (1, 2), with the clear distance between one of the primary electrodes (1, 2) and the trigger electrodes (19) forming the partial spark gap.

## Revendications

1. Agencement éclateur encapsulé de façon résistante à la pression pour détourner des intensités parasites nuisibles dues à des surtensions, comportant au moins deux électrodes situées dans un boîtier conducteur ou pourvu d'un revêtement conducteur et agencées sensiblement en vis-à-vis l'une de l'autre, entre lesquelles est formé un espace de décharge, les électrodes étant isolées par rapport au boîtier,
**caractérisé en ce qu'**une tension de déclenchement est applicable directement via le boîtier conducteur pour former un éclateur partiel dans l'espace de décharge, l'éclateur principal entre les électrodes principales étant susceptible d'être allumé via l'éclateur partiel.

2. Agencement éclateur selon la revendication 1, **caractérisé en ce que** l'isolation située entre l'espace de décharge et le boîtier est interrompue dans la zone de l'éclateur partiel à réaliser.

3. Agencement éclateur selon la revendication 2, **caractérisé en ce que** dans l'interruption est agencé un élément d'écartement isolant adapté à la forme du boîtier et de préférence annulaire, l'élément d'écartement possédant au moins une échancrure ou un perçage en forme de fente pour l'éclateur partiel.

4. Agencement éclateur selon l'une des revendications précédentes, **caractérisé en ce que** les électrodes situées en vis-à-vis enferment une cavité qui forme un espace. de décharge en forme de chambre.

5. Agencement éclateur selon la revendication 2, **caractérisé en ce que** dans l'interruption est agencé un insert conducteur en contact avec le boîtier conducteur, pénétrant jusque dans l'espace de décharge et constitué en matériau résistant à l'effritement.

6. Agencement éclateur selon la revendication 5, **caractérisé en ce que** les électrodes possèdent des formes coniques dirigées l'une vers l'autre, l'insert conducteur aboutissant vers les cônes opposés pour former les éclateurs partiels dans deux espaces de décharge.

7. Agencement éclateur selon la revendication 6, **caractérisé en ce que** l'insert conducteur possède une forme de disque adapté du côté périphérie extérieure au boîtier et présente une ouverture, les extrémités intérieures de l'ouverture présentant une épaisseur réduite et étant dirigées vers les électrodes.

8. Agencement éclateur selon la revendication 6, **caractérisé en ce que** l'insert conducteur est réalisé en forme d'anneau qui comprend plusieurs barrettes dirigées vers le centre, les distances entre les barrettes et l'anneau formant une partie au moins de l'espace de décharge.

9. Agencement éclateur selon la revendication 2, **caractérisé en ce que** dans l'interruption est agencé un insert en matière plastique conductrice pénétrant au moins partiellement jusque dans l'espace de décharge, matière qui possède des propriétés de commande de courant.

10. Agencement éclateur selon l'une des revendications 2 à 9, **caractérisé par** une réalisation à symétrie de révolution par rapport à l'axe longitudinal médian ainsi que par une configuration symétrique perpendiculairement à l'axe longitudinal médian, en vue en coupe dans la zone de l'interruption de l'isolation.

11. Agencement éclateur selon la revendication 1, **caractérisé en ce que** dans la zone délimitée par les surfaces d'électrodes mutuellement en vis-à-vis et par la face intérieure du boîtier, il se trouve une substance isolante dégageant du gaz, exception faite d'un tronçon pour l'espace de décharge, au moins une électrode de déclenchement étant noyée ou intégrée dans la substance isolante, qui est en contact électrique avec le boîtier conducteur.

12. Agencement éclateur selon la revendication 11, **caractérisé en ce que**
l'électrode de déclenchement se trouve de façon asymétrique dans l'espace entre les électrodes, la distance libre entre les électrodes principales et l'électrode de déclenchement formant l'éclateur partiel.
